# EUROPÄISCHE PATENTSCHRIFT

(11) **EP 1 125 800 B1**
(45) Veröffentlichungstag und Bekanntmachung des Hinweises auf die Patenterteilung: **27.04.2005**
(21) Anmeldenummer: 01103406.3
(22) Anmeldetag: 14.02.2001
(51) Int. Cl.: B60R 21/06, B60R 5/04, B60P 7/08

(54) **Bahnförmige Rückhaltevorrichtung für den Innenraum von Kraftfahrzeugen**
Restraining sheet for the interior of a motor vehicle
Nappe de retenue pour l'habitacle d'un véhicule automobile

(30) Priorität: 18.02.2000 DE 10007613
(43) Veröffentlichungstag der Anmeldung: 22.08.2001
(73) Patentinhaber: BOS GmbH & Co. KG, 73760 Ostfildern (DE)
(72) Erfinder: Vanhoutte, Peter, 8490 Varsenare (BE)
(74) Vertreter: Patentanwälte Ruff, Wilhelm, Beier, Dauster & Partner

(56) Entgegenhaltungen:
- EP-A- 0 672 557
- US-A- 4 213 636
- US-A- 5 443 586
- PATENT ABSTRACTS OF JAPAN vol. 2000, no. 02, 29. Februar 2000 (2000-02-29) & JP 11 321463 A (ASHIMORI IND CO LTD), 24. November 1999 (1999-11-24)

## Beschreibung

Die Erfindung betrifft eine bahnförmige Rückhaltevorrichtung für den Innenraum von Kraftfahrzeugen entsprechend dem Oberbegriff des Anspruchs 1.

Bahnförmige Rückhaltevorrichtungen dieser Gattung, wie z.B. gemäß der EP 0 672 557 B1, sind mit fahrzeugseitig zu befestigenden starren Haltestangen oder für den Fall, dass die Rückhaltevorrichtung bei Nichtgebrauch relativ handlich bleiben soll, mit einer oder mit zwei zumeist mittig geteilten, aneinanderfaltbaren Haltestangen versehen. Die Haltestangen sind bis auf die massiven Einhängeenden regelmäßig rohrförmig ausgebildet.

Um eine faltbare Haltestange in ihrer gestreckten Lage zu verriegeln, bedarf es einer Verriegelungsvorrichtung, welche entsprechend einer offenkundig vorbenutzten Anordnung z.B. zwei Steckverriegelungsstifte aufweisen kann, welche die aus einer endseitigen Überlappung der beiden Axialabschnitte gebildete Teilungsstelle im Axialabstand voneinander quer durchsetzen.

Ausgehend von der vorbeschriebenen bekannten Anordnung, liegt der Erfindung die Aufgabe zugrunde, eine mit aneinanderfaltbaren Haltestangen versehene bahnförmige Rückhaltevorrichtung möglichst bedienungsfreundlich zu gestalten.

Entsprechend der Erfindung wird diese Aufgabe dadurch gelöst, dass das Verriegelungsmittel eine auf der Haltestange geführte Schiebehülse ist, welche beide benachbarten Endbereiche der sich in ihrer gestreckten Lage befindenden Axialabschnitte, die Teilungsstelle sowie die dort angeordnete Gelenkverbindung mit einem axialen Verriegelungsbereich übergreift, und dass die Schiebehülse entgegen Federrückstellkraft in ihre entriegelte Lage hinein axial verschiebbar ist, in welcher sich die Schiebehülse nur auf einem Axialabschnitt befindet.

Entsprechend der Erfindung lassen sich die die Haltebahn tragenden Haltestangen in einfacher Weise dadurch zusammenfalten, dass man lediglich die jeweilige Schiebehülse aus ihrer die Teilungsstelle sowie die Gelenkverbindung überlappenden Position entgegen Federrückstellkraft auf nur einen Axialabschnitt plaziert, worauf die beiden Axialabschnitte ungehindert in eine Parallellage aneinandergefaltet werden können. Umgekehrt genügt es, die jeweilige Haltestange in ihre gestreckte Lage zu bringen, worauf sich die Schiebehülse unter Wirkung der Federrückstellkraft selbsttätig in ihre Verriegelungslage zurückbewegt.

Eine bevorzugte baulich einfache Ausführungsform ist dadurch gegeben, dass die Schiebehülse nur in eine Axialrichtung entgegen einer Federrückstellkraft in ihre entriegelte Lage hinein verschiebbar ist.

In weiterer Ausgestaltung der Erfindung ist die Federrückstellkraft von einer in einem rohrförmigen Axialabschnitt angeordneten und sich dort an einem Widerlager abstützenden Feder gebildet, welche an einem von der Innenmantelfläche der Schiebehülse ausgehenden Mitnehmerfortsatz angreift, der die Rohrwand des Axialabschnitts in mindestens einem zur Teilungsstelle hin gerichteten Längsschlitz durchsetzt.

Eine stabile und sichere Führung der Schiebehülse ist entsprechend einer anderen erfindungsgemäßen Ausführungsform dadurch gewährleistet, dass die Rohrwand des Axialabschnitts zwei diametral gegenüberliegende, zur Teilungsstelle hin gerichtete Längsschlitze aufweist, welche beide von einem die Schiebehülse quer durchsetzenden Haltestab durchgriffen sind, welcher den Mitnehmerfortsatz bildet.

Eine besonders leichtgängige Bedienung der Schiebehülse ist entsprechend einer anderen erfindungsgemäßen Ausführungsform dadurch geschaffen worden, dass zwischen der Schiebehülse und jedem Endbereich des korrespondierenden Axialabschnittes ein Gleitlager, insbesondere ein ringförmiges Gleitlager, angeordnet ist.

Dieses Gleitlager kann in einfacher und funktionstüchtiger Weise so ausgebildet sein, dass es von einem jeweils auf der Außenmantelfläche des Endbereichs eines Axialabschnitts angeordneten Lagerring, insbesondere aus einem Gleitlagereigenschaften aufweisenden Kunststoff, wie z.B. aus Polyamid od. dgl., gebildet ist.

Zusätzliche Erfindungsmerkmale sind weiteren Unteransprüchen zu entnehmen.

In den Zeichnungen ist ein bevorzugtes erfindungsgemäßes Ausführungsbeispiel dargestellt, es zeigt
Fig. 1 in Alleinstellung die Ansicht einer bahnförmigen Rückhaltevorrichtung mit einer aus netzartigem Werkstoff gefertigten Haltebahn,
Fig. 2 in Alleinstellung den mittleren Bereich einer Haltestange etwa an der Stelle des in Fig. 1 mit D bezeichneten Details in gestreckter Verriegelungslage der Haltestange und
Fig. 3 die gegenüber Fig. 2 vergrößert dargestellte Anordnung in ihrer entriegelten, aneinandergefalteten Lage.

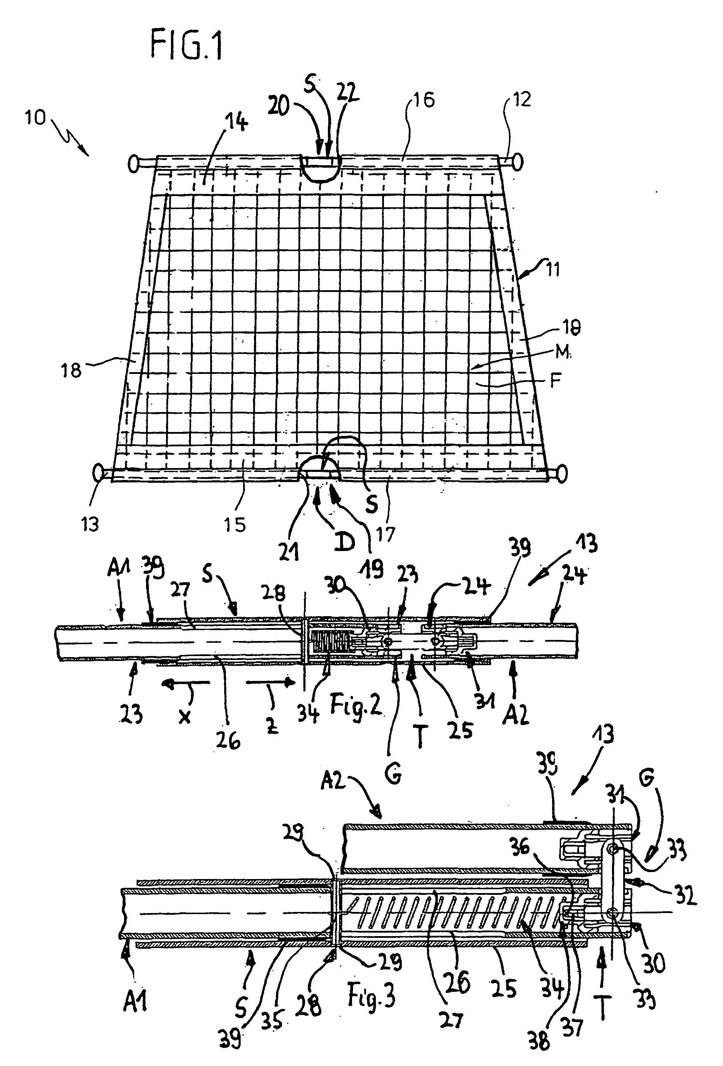

In Fig. 1 ist eine bahnförmige Rückhaltevorrichtung für den Innenraum von Kraftfahrzeugen insgesamt mit der Bezugsziffer 10 bezeichnet.

Die Rückhaltevorrichtung 10 dient der Unterteilung und Absicherung des Laderaums, z.B. eines Kombinations-Kraftwagens.

Die Rückhaltevorrichtung 10 weist eine Haltebahn 11 auf, welche netzartige Maschen M besitzt, deren ringsum geschlossene Maschenfelder mit F bezeichnet sind.

Zu ihrer Befestigung weist die Rückhaltevorrichtung 10 eine obere rohrförmige Haltestange 12 und eine untere rohrförmige Haltestange 13 auf. Zu deren Befestigung an der Haltebahn 11 sind oben an dieser eine Randeinfassung 14 und unten eine Randeinfassung 15 angebracht.

Die Randeinfassungen 14, 15 bestehen jeweils aus einer mit einer nicht gezeigten textilen Armierung versehenen Folie aus z.B. PVC.

Die Randeinfassungen 14, 15 weisen eine streifenartige Form auf und werden über die Stanzränder der Haltebahn 11 doppellagig umgeschlagen.

Die streifenförmigen Randeinfassungen 14, 15 sind so breit, dass sie nach ihrer Anbringung an der Haltebahn 11 Aufnahmekanäle 16, 17 für die Haltestangen 12, 13 ermöglichen. Die schräg aufeinanderzu nach oben verlaufenden Randeinfassungen tragen die Bezugsziffern 18.

Die mittleren Bereiche 19, 20 der Haltestangen 13, 12 sind über Aussparungen 21, 22 in den Randeinfassungen 15, 14 zugänglich. Am Beispiel der unteren Haltestange 13 sei nun deren Aufbau und deren Einfaltfunktion im einzelnen gezeigt:

Auf der Haltestange 13, die im Bereich ihrer Teilungsstelle T in zwei Axialabschnitte A1 und A2 unterteilt ist, ist eine Schiebehülse S gleitend geführt.

Die Schiebehülse S übergreift beide benachbarten Endbereiche 23, 24 der Axialabschnitte A1 und A2, die Teilungsstelle T sowie die dort angeordnete Gelenkverbindung G mit einem axialen Verriegelungsbereich 25.

Die Rohrwand des Axialabschnitts A1 weist zwei diametral gegenüberliegende, zur Teilungsstelle T hin gerichtete axiale Längsschlitze 26, 27 auf, welche beide von einem die Schiebehülse S quer durchsetzenden Haltestift 28 durchgriffen sind. Der Haltestift 28 ist ein Schwerspannstift, welcher beidendig in Radialbohrungen 29 verankert ist, welche in der Wand der Schiebehülse S angeordnet sind.

Zur Bildung der Gelenkverbindung G ist endseitig in jedem rohrförmigen Axialabschnitt A1, A2 je ein Haltestopfen 30, 31 befestigt, beispielsweise eingepresst oder eingeklebt. Beide Haltestopfen 30, 31 sind über zwei sich parallel zueinander erstreckende Gelenklaschen miteinander verbunden, von denen in den Fig. 2 und 3 nur eine Gelenklasche 32 sichtbar ist. Die Gelenklaschen 32 bzw. das Gelenklaschenpaar, sind bzw. ist mittels Gelenkzapfen 33 an den Haltestopfen 30, 31 angelenkt.

In dem rohrförmigen axialen Endabschnitt A1 ist eine Schraubenzugfeder 34 aufgenommen, deren eines Federauge 35 den Haltestift 28 umgreift und deren anderes Federauge 36 eine Befestigungsöffnung 37 durchgreift, welche in einem Zentrieransatz 38 angeordnet ist, welcher in das Innere des rohrförmigen Axialabschnitts A1 hineinweist und welcher vom Haltestopfen 30 gebildet ist.

Wenn man die Haltestange 13 zusammenfalten will, verschiebt man die Schiebehülse S relativ zu den beiden Axialabschnitten A1 und A2 nach links in Richtung x entgegen der Rückstellkraft der Schraubenzugfeder 34, welche, während der Haltestift 28 durch die beiden Längsschlitze 26, 27 nach links gleitet, auseinandergezogen wird (vgl. Fig. 3). Dabei gelangt die Schiebehülse S einschließlich ihres Verriegelungsbereichs 25 gänzlich auf den Axialabschnitt A1, so dass die beiden Axialabschnitte A1 und A2 in ihre einander parallele eingefaltete Lage gemäß Fig. 3 versetzt werden können.

Dasselbe geschieht am mittleren Bereich 20 der oberen Haltestange 12, so dass die bahnförmige Rückhaltevorrichtung 10 im eingefalteten Zustand einen relativ geringen Stauraum einnehmen kann.

Eine Streckung der Haltestange 13 geschieht in analog umgekehrter Wiese, wobei die sich entspannende Zugfeder 34 die Schiebehülse S in Richtung z automatisch in deren Verriegelungsposition gemäß Fig. 2 zurückversetzt.

Zur Erleichterung der Gleitbewegung zwischen der Schiebehülse S und den axialen Endabschnitten A1 und A2 tragen deren Endbereiche 23, 24 jeweils dort in zweckmäßiger Weise befestigte Kunststoff-Gleitlagerringe 39, die z.B. aus Polyamid bestehen können.

## Patentansprüche

1. Bahnförmige Rückhaltevorrichtung (10) für den Innenraum von Kraftfahrzeugen, mit einer insbesondere aus netzartigem Werkstoff gefertigten Haltebahn (11), welche zu ihrer fahrzeugseitigen Anbringung an gegenüberliegenden Enden Befestigungsränder (14, 15) aufweist, von denen mindestens einer mit einer insbesondere rohrförmigen Haltestange (12, 13) versehen ist, welche in mindestens zwei Axialabschnitte (A1, A2) geteilt ist, die, an ihrer Teilungsstelle (T) mittels einer Gelenkverbindung (G) aneinandergehalten, über ein Verriegelungsmittel (S) in ihrer gestreckten Lage gegeneinander arretierbar und in entriegelter Lage des Verriegelungsmittels (S) um die Gelenkverbindung (G) herum aneinanderfaltbar sind, **dadurch gekennzeichnet dass** das Verriegelungsmittel eine auf der Haltestange (13, 14) geführte Schiebehülse (S) ist, welche beide benachbarten Endbereiche (23, 24) der sich in ihrer gestreckten Lage befindenden Axialabschnitte (A1, A2), die Teilungsstelle (T) und die dort angeordnete Gelenkverbindung (G) mit einem axialen Verriegelungsbereich (25) übergreift, und dass die Schiebehülse (S) entgegen Federrückstellkraft (bei 34) in ihre entriegelte Lage hinein axial verschiebbar ist, in welcher sich die Schiebehülse (S) auf nur einem Axialabschnitt (A1) befindet.

2. Bahnförmige Rückhaltevorrichtung nach Anspruch 1, **dadurch gekennzeichnet, dass** die Schiebehülse (S) nur in einer Axialrichtung (x) entgegen einer Federrückstellkraft (bei 34) in ihre entriegelte Lage verschiebbar ist.

3. Bahnförmige Rückhaltevorrichtung nach Anspruch 1 oder nach Anspruch 2, **dadurch gekennzeichnet, dass** die Federrückstellkraft von einer in einem rohrförmigen Axialabschnitt (A1) angeordneten und sich dort an einem Widerlager (37) abstützenden Feder (34) gebildet ist, welche an einem von der Innenmantelfläche der Schiebehülse (S) ausgehenden Mitnehmerfortsatz (28) angreift, der die Rohrwand des Axialabschnitts (A1) in mindestens einem zur Teilungsstelle (T) hin gerichteten Längsschlitz (26, 27) durchsetzt.

4. Bahnförmige Rückhaltevorrichtung nach Anspruch 3, **dadurch gekennzeichnet, dass** die Rohrwand des Axialabschnitts (A1) zwei diametral gegenüberliegende, zur Teilungsstelle (T) hin gerichtete Längsschlitze (26, 27) aufweist, welche beide von einem die Schiebehülse (S) quer durchsetzenden Haltestift (28) durchgriffen sind, welcher den Mitnehmerfortsatz bildet.

5. Bahnförmige Rückhaltevorrichtung nach einem der Ansprüche 1 bis 4, **dadurch gekennzeichnet, dass** zur Bildung der Gelenkverbindung (G) endseitig in jedem rohrförmigen Axialabschnitt (A1, A2) ein Haltestopfen (30, 31) befestigt ist, und dass beide Haltestopfen (30, 31) über mindestens ein Gelenkelement (32) miteinander verbunden sind.

6. Bahnförmige Rückhaltevorrichtung nach Anspruch 5, **dadurch gekennzeichnet, dass** die Gelenkverbindung (G) ein ebenes Gelenk bildet.

7. Bahnförmige Rückhaltevorrichtung nach Anspruch 5 oder nach Anspruch 6, **dadurch gekennzeichnet, dass** beiden Haltestopfen (30, 31) über zwei sich parallel zueinander erstreckende Gelenklaschen (32) miteinander verbunden sind.

8. Bahnförmige Rückhaltevorrichtung nach einem der Ansprüche 3 bis 7, **dadurch gekennzeichnet, dass** das der Feder (34) zugeordnete Widerlager des rohrförmigen Axialabschnitts (A1) von der in letzteren hineinweisenden inneren Stirnseite (bei 38) eines Haltestopfens (30) gebildet ist.

9. Bahnförmige Rückhaltevorrichtung nach einem der Ansprüche 1 bis 8, **dadurch gekennzeichnet, dass** die Federrückstellkraft von einer Zugfeder, insbesondere von einer Schraubenzugfeder (34), gebildet ist.

10. Bahnförmige Rückhaltevorrichtung nach einem der Ansprüche 3 bis 9, **dadurch gekennzeichnet, dass** die innere Stirnseite des Haltestopfens (30) einen Zentrieransatz (38) für die Schraubenzugfeder (34) bildet.

11. Bahnförmige Rückhaltevorrichtung nach einem der Ansprüche 7 bis 10, **dadurch gekennzeichnet, dass** die innere Stirnseite (bei 38) des Haltestopfens (30) eine Befestigungsöffnung (37) für ein Schraubenzugfeder-Auge (36) bildet.

12. Bahnförmige Rückhaltevorrichtung nach einem der Ansprüche 3 bis 11, **dadurch gekennzeichnet, dass** ein Schraubenzugfeder-Auge (35) den Mitnehmerfortsatz (28) umgreift.

13. Bahnförmige Rückhaltevorrichtung nach einem der Ansprüche 1, bis 12, **dadurch gekennzeichnet, dass** zwischen der Schiebehülse und jedem Endbereich des korrespondierenden Axialabschnitts (A1, A2) ein Gleitlager, insbesondere ein ringförmiges Gleitlager (39), angeordnet ist.

14. Bahnförmige Rückhaltevorrichtung nach Anspruch 13, **dadurch gekennzeichnet, dass** das Gleitlager von einem jeweils auf der Außenmantelfläche des Endbereichs (23, 24) eines Axialabschnitts (A1, A2) angeordneten Lagerring (39), insbesondere aus einem Gleitlagereigenschaften aufweisenden Kunststoff, wie z.B. aus Polyamid od. dgl., gebildet ist.

## Claims

1. Web-shaped restraint device (10) for the interior of motor vehicles, comprising a retaining web (11) which is made especially of a net-like material and which has mounting edges (14, 15) at opposite ends for its attachment to the vehicle, at least one of which mounting edges (14, 15) is provided with a retaining rod (12, 13), especially a tubular retaining rod (12, 13), divided into at least two axial segments (A1, A2) which are held against each other at their division point (T) by means of a hinge joint (G), can be locked to each other in their extended position by a locking means (S) and can be folded one onto the other about the hinge joint (G) in the unlocked position of the locking means (S), **characterised in that** the locking means is a sliding sleeve (S) which is guided on the retaining rod (13, 14) and which engages by an axial locking region (25) over both adjacent end regions (23, 24) of the axial segments (A1, A2) in their extended position, over the division point (T) and over the hinge joint (G) arranged there, and the sliding sleeve (S) is axially displaceable against spring restoring force (at 34) into its unlocked position in which the sliding sleeve (S) is situated on only one axial segment (A1).

2. Web-shaped restraint device according to claim 1, **characterised in that** the sliding sleeve (S) is displaceable against spring restoring force (at 34) into its unlocked position in one axial direction (x) only.

3. Web-shaped restraint device according to claim 1 or according to claim 2, **characterised in that** the spring restoring force is provided by a spring (34) which is arranged in one tubular axial segment (A1) and is supported there against an abutment (37) and which acts on a driving projection (28) which projects from the inner circumferential surface of the sliding sleeve (S) and extends through the tube wall of the axial segment (A1) in at least one longitudinal slot (26, 27) oriented towards the division point (T).

4. Web-shaped restraint device according to claim 3, **characterised in that** the tube wall of the axial segment (A1) has two diametrically opposite longitudinal slots (26, 27) which are oriented towards the division point (T) and through both of which there extends a retaining pin (28) which passes transversely through the sliding sleeve (S) and forms the driving projection.

5. Web-shaped restraint device according to any one of claims 1 to 4, **characterised in that** to form the hinge joint (G) a retaining plug (30, 31) is fastened in each tubular axial segment (A1, A2) at the end thereof and the two retaining plugs (30, 31) are connected to each other by at least one hinge element (32).

6. Web-shaped restraint device according to claim 5, **characterised in that** the hinge joint (G) forms a flat hinge.

7. Web-shaped restraint device according to claim 5 or according to claim 6, **characterised in that** the two retaining plugs (30, 31) are connected to each other by means of two hinge links (32) which extend parallel to each other.

8. Web-shaped restraint device according to any one of claims 3 to 7, **characterised in that** the abutment of the tubular axial segment (A1) associated with the spring (34) is formed by the inner end face (at 38) of a retaining plug (30) which points into the axial segment (A1).

9. Web-shaped restraint device according to any one of claims 1 to 8, **characterised in that** the spring restoring force is provided by a tension spring, especially a helical tension spring (34).

10. Web-shaped restraint device according to any one of claims 3 to 9, **characterised in that** the inner end face of the retaining plug (30) forms a centring projection (38) for the helical tension spring (34).

11. Web-shaped restraint device according to any one of claims 7 to 10, **characterised in that** the inner end face (at 38) of the retaining plug (30) forms a fastening aperture (37) for a helical tension spring eye (36).

12. Web-shaped restraint device according to any one of claims 3 to 11, **characterised in that** a helical tension spring eye (35) engages around the driving projection (28).

13. Web-shaped restraint device according to any one of claims 1 to 12, **characterised in that** a slide bearing, especially a ring-shaped slide bearing (39), is arranged between the sliding sleeve and each end region of the corresponding axial segment (A1, A2).

14. Web-shaped restraint device according to claim 13, **characterised in that** the slide bearing is formed by a bearing ring (39), especially made of a plastics material having slide bearing properties, such as, for example, of polyamide or the like, which is arranged on the outer circumferential surface of the respective end region (23, 24) of each axial segment (A1, A2).

## Revendications

1. Dispositif de retenue (10) en forme de nappe, pour l'habitacle de véhicules automobiles, comportant une nappe de retenue (11) qui est notamment fabriquée en un matériau du type filet et présente à des extrémités opposées, en vue de son installation côté véhicule, des rebords de fixation (14, 15) dont au moins l'un est pourvu d'une tige d'arrêt (12, 13) notamment tubulaire, scindée en au moins deux segments axiaux (A1, A2) qui sont retenus l'un sur l'autre dans leur zone de séparation (T), au moyen d'une liaison articulée (G), peuvent être mutuellement arrêtés dans leur position déployée, par l'intermédiaire d'un moyen de verrouillage (S), et peuvent être repliés l'un sur l'autre tout autour de la liaison articulée (G), en position déverrouillée du moyen de verrouillage (S), **caractérisé par le fait que** le moyen de verrouillage est une douille coulissante (S) qui est guidée sur la tige d'arrêt (12, 13) et coiffe, par sa région axiale de verrouillage (25), les deux régions extrêmes voisines (23, 24) des segments axiaux (A1, A2) occupant leur position déployée, la zone de séparation (T) et la liaison articulée (G) située à cet emplacement ; et **par le fait que** ladite douille coulissante (S) peut parvenir par coulissement axial, en s'opposant à une force élastique de rappel (en 34), à sa position déverrouillée dans laquelle ladite douille coulissante (S) se trouve uniquement sur un segment axial (A1).

2. Dispositif de retenue en forme de nappe selon la revendication 1, **caractérisé par le fait que** la douille coulissante (S) peut coulisser jusqu'à sa position déverrouillée, en s'opposant à une force élastique de rappel (en 34), uniquement dans une direction axiale (x).

3. Dispositif de retenue en forme de nappe selon la revendication 1 ou selon la revendication 2, **caractérisé par le fait que** la force élastique de rappel est matérialisée par un ressort (34) qui est logé dans un segment axial tubulaire (A1) dans lequel il prend appui sur une contre-butée (37), et vient en prise avec une protubérance d'entraînement (28) partant de la surface de l'enveloppe intérieure de la douille coulissante (S), et traversant la paroi tubulaire dudit segment axial (A1) dans au moins une fente longitudinale (26, 27) dirigée vers la zone de séparation (T).

4. Dispositif de retenue en forme de nappe selon la revendication 3, **caractérisé par le fait que** la paroi tubulaire du segment axial (A1) présente deux fentes longitudinales (26, 27) diamétralement opposées, orientées vers la zone de séparation (T) et parcourues l'une et l'autre, de part en part, par une cheville d'arrêt (28) traversant la douille coulissante (S) dans le sens transversal et matérialisant la protubérance d'entraînement.

5. Dispositif de retenue en forme de nappe selon l'une des revendications 1 à 4, **caractérisé par le fait que**, pour former la liaison articulée (G), un bouchon d'arrêt (30, 31) est fixé par les extrémités dans chaque segment axial tubulaire (A1, A2) ; et **par le fait que** les deux bouchons d'arrêt (30, 31) sont reliés l'un à l'autre par l'intermédiaire d'au moins un élément d'articulation (32).

6. Dispositif de retenue en forme de nappe selon la revendication 5, **caractérisé par le fait que** la liaison articulée (G) forme une articulation plane.

7. Dispositif de retenue en forme de nappe selon la revendication 5 ou selon la revendication 6, **caractérisé par le fait que** les deux bouchons d'arrêt (30, 31) sont reliés l'un à l'autre par l'intermédiaire de deux pattes d'articulation (32) s'étendant parallèlement l'une à l'autre.

8. Dispositif de retenue en forme de nappe selon l'une des revendications 3 à 7, **caractérisé par le fait que** la contre-butée du segment axial tubulaire (A1), associée au ressort (34), est matérialisée par la face extrême interne (en 38) d'un bouchon d'arrêt (30), orientée vers l'intérieur dudit segment.

9. Dispositif de retenue en forme de nappe selon l'une des revendications 1 à 8, **caractérisé par le fait que** la force élastique de rappel est développée par un ressort de traction, notamment par un ressort hélicoïdal de traction (34).

10. Dispositif de retenue en forme de nappe selon l'une des revendications 3 à 9, **caractérisé par le fait que** la face extrême interne du bouchon d'arrêt (30) matérialise un appendice de centrage (38) affecté au ressort hélicoïdal de traction (34).

11. Dispositif de retenue en forme de nappe selon l'une des revendications 7 à 10, **caractérisé par le fait que** la face extrême interne (en 38) du bouchon d'arrêt (30) matérialise un orifice de fixation (37) affecté à un oeillet (36) du ressort hélicoïdal de traction.

12. Dispositif de retenue en forme de nappe selon l'une des revendications 3 à 11, **caractérisé par le fait qu'**un oeillet (35) du ressort hélicoïdal de traction ceinture la protubérance d'entraînement (28).

13. Dispositif de retenue en forme de nappe selon l'une des revendications 1 à 12, **caractérisé par le fait qu'**un coussinet de glissement, en particulier un coussinet annulaire de glissement (39), est interposé entre la douille coulissante et chaque région extrême du segment axial (A1, A2) correspondant.

14. Dispositif de retenue en forme de nappe selon la revendication 13, **caractérisé par le fait que** le coussinet de glissement est formé d'un coussinet annulaire de glissement (39) notamment en une matière plastique telle qu'un polyamide, par exemple, ou un matériau similaire doué de propriétés de glissement, respectivement disposé sur la surface extérieure de l'enveloppe de la région extrême (23, 24) d'un segment axial (A1, A2).
